(19) Europäisches Patentamt
European Patent Office
Office européen des brevets

(11) EP 3 505 580 A1

(12) **EUROPEAN PATENT APPLICATION**
published in accordance with Art. 153(4) EPC

(43) Date of publication:
**03.07.2019 Bulletin 2019/27**

(21) Application number: **17845814.7**

(22) Date of filing: **06.06.2017**

(51) Int Cl.:
***C09D 201/00*** (2006.01) ***C09C 1/36*** (2006.01)
***C09C 3/06*** (2006.01) ***C09C 3/12*** (2006.01)

(86) International application number:
**PCT/JP2017/020992**

(87) International publication number:
**WO 2018/042803 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.08.2016 JP 2016166452**

(71) Applicant: **Shin-Etsu Chemical Co., Ltd.**
**Tokyo 100-0004 (JP)**

(72) Inventors:
- **YOSHII Ryosuke**
**Annaka-shi**
**Gunma 379-0224 (JP)**
- **MASUDA Kohei**
**Annaka-shi**
**Gunma 379-0224 (JP)**
- **FURUDATE Manabu**
**Kamisu-shi**
**Ibaraki 314-0102 (JP)**
- **INOUE Tomohiro**
**Kamisu-shi**
**Ibaraki 314-0102 (JP)**

(74) Representative: **Ter Meer Steinmeister & Partner**
**Patentanwälte mbB**
**Nymphenburger Straße 4**
**80335 München (DE)**

# (54) COATING COMPOSITION AND COATED ARTICLE

(57) A coating composition containing (A) 100 parts by mass of a room-temperature-curable resin and (B) 0.1-50 parts by mass of core-shell microparticles that include tetragonal titanium oxide solid solution microparticles in which tin and manganese have been dissolved as the core and a shell of silicon oxide on the outer side of the core exhibits room-temperature curability during coating film curing and exhibits UV shielding properties while maintaining transparency to visible light, whereby it is possible to provide a cured film capable of suppressing discoloration and deterioration of a substrate without compromising the appearance of the substrate.

EP 3 505 580 A1

## Description

### TECHNICAL FIELD

This invention relates to a coating composition and a coated article. More particularly, it relates to a room temperature-curable coating composition containing UV-absorbing inorganic nanoparticles and an article coated with a cured film of the composition.

### BACKGROUND ART

It is known that as exterior and interior members of buildings and structures are exposed to UV in sunlight for a long period of time, coatings and substrates themselves are deteriorated. Particularly in the case of coatings containing pigments, color fading and gloss degradation are significant problems.

As means for solving these problems, it is a common practice to apply a UV absorber-containing coating to the material surface to prevent the material from UV degradation.

For example, Patent Documents 1 and 2 use organic phenyltriazine compounds as the UV absorber to prevent degradation of building members.

However, since the phenyltriazine base UV absorbers are organic compounds, the phenyltriazine compounds themselves are degraded upon long-term UV exposure, giving rise to problems including a substantial loss of UV absorptivity and discoloration.

Patent Documents 3 and 4 report the use of zinc oxide as the metal oxide microparticles having UV shielding properties.

In these techniques, however, the amount of zinc oxide loaded must be increased in order to impart a satisfactory UV shielding ability to the coatings. As a result, there arise problems including storage stability and whitening during outdoor exposure.

On the other hand, titanium oxide has a higher absorption coefficient than zinc oxide, indicating a possibility to solve the problems associated with zinc oxide. However, it is difficult to disperse titanium oxide in a coating composition in a stable and transparent fashion.

Additionally, since titanium oxide has a strong photocatalytic activity, it exerts cracking and choking actions when loaded in coating compositions. It is not believed that titanium oxide exhibits weather resistance.

It is reported in Patent Document 5 that core/shell type particles having a layer of manganese dioxide on the surface of titanium oxide particles have controlled photocatalytic activity.

However, manganese dioxide is known to act as an oxidant. A coating composition loaded with the above particles has a possibility that organic compounds such as synthetic resin in the composition are oxidized, and the coating is degraded.

As a result of extensive investigations, the inventors found in Patent Documents 6 and 7 that a silicone coating composition containing tetragonal titanium oxide solid-solution nanoparticles having tin and manganese incorporated in solid solution is unsusceptible to cracking and exhibits high weather resistance. Since the silicone coating compositions of these Patent Documents need heat curing, it is difficult to use them in the coating application to exterior and interior members of buildings.

Also, when commonly marketed titanium oxide nanoparticles are introduced in room temperature-curable coating compositions, there arises the problem that the microparticles agglomerate together to invite white turbidity, resulting in substantial losses of transparency and UV absorptivity.

There is yet unavailable a room temperature-curable coating composition which cures into a cured film that develops UV shielding properties while maintaining transparency, and possesses an ability to protect the substrate from long-term weather exposure.

### PRIOR ART DOCUMENTS

### PATENT DOCUMENTS

Patent Document 1: JP 4699992
Patent Document 2: JP 5361513
Patent Document 3: JP-A 2010-261012
Patent Document 4: JP-A 2011-225660
Patent Document 5: JP 5404421

Patent Document 6: JP 5704133
Patent Document 7: JP-A 2016-014132

## SUMMARY OF INVENTION

### TECHNICAL PROBLEM

An object of the invention, which has been made under the above-mentioned circumstances, is to provide a coating composition which is curable at room temperature when a coating is cured, and forms a cured film that exhibits UV shielding properties while maintaining visible light transparency so that the cured film may prevent fading and degradation of a substrate without detracting from its outer appearance.

### SOLUTION TO PROBLEM

Making extensive investigations to attain the above object, the inventors have found that when a room temperature-curable resin is blended with a predetermined proportion of core/shell nanoparticles having specific titanium oxide cores, the resulting composition is curable at room temperature when a coating is cured, and forms a cured film which exhibits UV shielding properties while maintaining visible light transparency. The composition is thus suited in the coating application to exterior and interior members of buildings. The invention is predicated on this finding.
The invention is defined below.

1. A coating composition comprising

    (A) 100 parts by weight of a room temperature curable resin and
    (B) 0.1 to 50 parts by weight of core/shell nanoparticles each consisting of a core in the form of a tetragonal titanium oxide solid-solution nanoparticle having tin and manganese incorporated in solid solution and a shell of silicon oxide around the core.

2. The coating composition of 1 wherein the core/shell nanoparticles have a 50% cumulative diameter of 1 to 50 nm in a volume basis particle size distribution as measured by the dynamic light scattering method.
3. The coating composition of 1 or 2 wherein the room temperature curable resin is one or more resins selected from the group consisting of acrylic resins, polyester resins, silicone-modified polyester resins, silicone-modified acrylic resins, epoxy resins, polycarbonate resins, silicone resins, fluoro-resins, chlorine-base resins, polyolefin resins, urethane resins, and acrylic urethane resins.
4. The coating composition of any one of 1 to 3, further comprising one or more oxides selected from the group consisting of aluminum oxide, cerium oxide, zinc oxide, indium tin oxide, zirconium oxide, tin oxide, iron oxide, silicon oxide, and titanium oxide exclusive of the core/shell nanoparticles (B).
5. The coating composition of any one of 1 to 4 wherein the shell of silicon oxide on the surface of the core/shell nanoparticle has an organosilyl group bonded thereto via a siloxane bond.
6. A cured film obtained by curing the coating composition of any one of 1 to 5.
7. A coated article comprising a cured film obtained by curing the coating composition of any one of 1 to 5.
8. A coated article comprising a substrate and a cured film laid on at least one surface of the substrate, the cured film being obtained by curing the coating composition of any one of 1 to 5.

### ADVANTAGEOUS EFFECTS OF INVENTION

The coating composition of the invention is curable at room temperature and forms a cured film which exhibits UV shielding properties while maintaining visible light transparency so that the cured film may prevent fading and degradation of a substrate without detracting from its outer appearance.
The coating composition having such properties is suited as a UV-shielding clear coating composition of room temperature cure type applicable to various materials including exterior and interior members of buildings and structures. When applied to a substrate, the composition is effective for maintaining the outer appearance and performance of the substrate over a long period of time.

### BRIEF DESCRIPTION OF DRAWINGS

FIG. 1 is a diagram showing UV/Vis transmission spectrum of the cured film prepared in Example 4.
FIG. 2 is a diagram showing UV/Vis transmission spectrum of the cured film prepared in Example 5.
FIG. 3 is a diagram showing UV/Vis transmission spectrum of the cured film prepared in Example 6.
FIG. 4 is a diagram showing UV/Vis transmission spectrum of the cured film prepared in Comparative Example 2.

## DESCRIPTION OF EMBODIMENTS

Below the invention is described in detail.

The invention provides a coating composition comprising (A) 100 parts by weight of a room temperature curable resin and (B) 0.1 to 50 parts by weight of core/shell nanoparticles each consisting of a core in the form of a tetragonal titanium oxide solid-solution nanoparticle having tin and manganese incorporated in solid solution and a shell of silicon oxide around the core.

As used herein, the "room temperature" at which a coating cures refers typically to a temperature range of 0 to 40°C, preferably 5 to 35°C.

### [1] Room temperature curable resin

Examples of the room temperature curable resin used in the coating composition include clear coating compositions containing one or more resin components selected from the group consisting of acrylic resins, polyester resins, silicone-modified polyester resins, silicone-modified acrylic resins, epoxy resins, polycarbonate resins, silicone resins, fluoro-resins, chlorine base resins, polyolefin resins, urethane resins, and acrylic urethane resins. By selecting from the foregoing resins an appropriate resin having high affinity to a substrate to be coated with the inventive composition, a coating is endowed with high adhesion to the substrate.

The resin component may be any of commercially available room temperature curable coating compositions, examples of which include solventless silicone base coating compositions (KR-400, Shin-Etsu Chemical Co., Ltd.), oily epoxy base coating compositions (clear epoxy rust-preventive paint, Nipponpaint Co., Ltd.), aqueous acrylic silicone coating compositions (clear aqueous multipurpose color paint, Asahipen Corp.), oily silicone coating compositions (waterproof No. 1 clear paint, Nihon Tokushu Toryo Co., Ltd.), aqueous acrylic varnish (clear aqueous varnish, Asahipen Corp.), oily urethane base coating compositions (oily varnish, Washin Paint Co., Ltd.), and aqueous urethane base coating compositions (aqueous urethane varnish, Washin Paint Co., Ltd.).

Notably, these coating compositions may contain water or organic solvents as a solvent. The resin component as active ingredient may be present either as emulsified in the solvent or as uniformly dissolved in the solvent.

### [2] Core/shell nanoparticles

The core/shell nanoparticles used in the coating composition are defined as each consisting of a core in the form of a tetragonal titanium oxide solid-solution nanoparticle having tin and manganese incorporated in solid solution and a shell of silicon oxide around the core.

Titanium oxide generally includes three types, rutile, anatase and brookite types. Herein titanium oxide of tetragonal rutile type is used as solid-solution solvent for tin and manganese because it has a low photocatalytic activity and high UV absorptivity.

The tin component as one solute is not particularly limited as long as it is derived from a tin salt. Included are tin oxide and tin chalcogenides such as tin sulfide, with tin oxide being preferred.

Exemplary tin salts include tin halides such as tin fluoride, tin chloride, tin bromide and tin iodide, tin halogenoids such as tin cyanide and tin isothiocyanide, and tin mineral acid salts such as tin nitrate, tin sulfate and tin phosphate. Of these, tin chloride is preferred for stability and availability.

Tin in the tin salt may have a valence of 2 to 4, with tetravalent tin being preferred.

The manganese component as another solute is not particularly limited as long as it is derived from a manganese salt. Included are manganese oxide and manganese chalcogenides such as manganese sulfide, with manganese oxide being preferred.

Exemplary manganese salts include manganese halides such as manganese fluoride, manganese chloride, manganese bromide and manganese iodide, manganese halogenoids such as manganese cyanide and manganese isothiocyanide, and manganese mineral acid salts such as manganese nitrate, manganese sulfate and manganese phosphate. Of these, manganese chloride is preferred for stability and availability.

Manganese in the manganese salt may have a valence of 2 to 7, with divalent manganese being preferred.

When tin and manganese form a solid solution with tetragonal titanium oxide, the amount of tin incorporated in solid solution is to provide a molar ratio of titanium to tin (Ti/Sn) of preferably 10/1 to 1,000/1, more preferably 20/1 to 200/1.

The amount of manganese incorporated in solid solution is to provide a molar ratio of titanium to manganese (Ti/Mn) of preferably 10/1 to 1,000/1, more preferably 20/1 to 200/1.

If the amount of tin or manganese in solid solution form is to provide a Ti/Sn or Ti/Mn molar ratio of less than 10, there is observed considerable light absorption in the visible region assigned to tin and manganese. If the Ti/Sn or Ti/Mn molar ratio exceeds 1,000, photocatalytic activity is not fully deprived, and the crystal system may turn to anatase type having low UV absorptivity.

The solid solution form of tin and manganese components may be either substitutional or interstitial.

The substitutional solid solution refers to a solid solution form in which tin and manganese substitute at the site of titanium(IV) ion in titanium oxide. The interstitial solid solution refers to a solid solution form in which tin and manganese fit in the space between crystal lattices of titanium oxide.

The interstitial type tends to create F-center which causes coloring, and due to poor symmetry around a metal ion, the Franck-Condon factor of vibronic transition at the metal ion increases, leading to more absorption of visible light. For this reason, the substitution type is preferred.

A shell of silicon oxide is formed around the core of nanoparticulate tetragonal titanium oxide having tin and manganese incorporated in solid solution. The shell may contain silicon oxide as the major component and another component(s) such as tin, aluminum and the like.

The shell of silicon oxide may be formed by any desired techniques. For example, the silicon oxide shell may be formed by reacting an organic silicon compound or inorganic silicon compound to surfaces of titanium oxide nanoparticles.

Examples of the organic silicon compound which can be used herein include tetraalkoxysilanes. The silicon oxide shell may be formed outside nanoparticulate titanium oxide cores by hydrolytic condensation of a tetraalkoxysilane.

Suitable tetraalkoxysilanes include commonly available ones such as tetramethoxysilane, tetraethoxysilane, tetra(n-propoxy)silane, tetra(i-propoxy)silane, and tetra(n-butoxy)silane. Of these, tetraethoxysilane is preferred from the standpoints of reactivity and safety.

Commercially available tetraalkoxysilanes may be used, for example, tetraethoxysilane KBE-04 (Shin-Etsu Chemical Co., Ltd.).

Hydrolytic condensation of a tetraalkoxysilane may be performed in water, optionally in the presence of a condensation catalyst such as ammonia, aluminum salts, organoaluminum compounds, tin salts, or organotin compounds. Of these condensation catalysts, ammonia is especially preferred because it also serves as a dispersant for the core nanoparticles.

Examples of the inorganic silicon compound include alkali silicates and active silicic acids obtained from cation exchange of alkali silicates. The silicon oxide shell may be formed outside nanoparticulate titanium oxide cores by mixing titanium oxide nanoparticles with the inorganic silicon compound.

Suitable alkali silicates include sodium silicate and potassium silicate which are commonly available.

Commercially available alkali silicates may be used, for example, Soda Silicate (Fuji Kagaku Corp.).

The active silicic acid is obtained by contacting an alkali silicate aqueous solution with a cation exchange resin to induce cation exchange.

The raw material for the alkali silicate aqueous solution includes the above-mentioned alkali silicates. In this case too, commercially available Soda Silicate (Fuji Kagaku Corp.) may be used.

As the cation exchange resin, an appropriate one be selected from commonly available cation exchange resins, for example, Amberjet 1024H (Organo Corp.).

The method for contacting an alkali silicate aqueous solution with a cation exchange resin is, for example, by adding a strongly acidic cation exchange resin (H+ type) to a water dilution of alkali silicate aqueous solution, or by flowing a water dilution of alkali silicate aqueous solution through an ion exchange column filled with a strongly acidic cation exchange resin (H+ type).

Although the concentration of the alkali silicate aqueous solution is not particularly limited, it is preferred from the standpoints of production efficiency and anti-gelation of the active silicic acid obtained therefrom that the concentration is 1 to 10% by weight, more preferably 1 to 5% by weight, and even more preferably 2 to 4% by weight, calculated as silica.

The cation exchange treatment is preferably carried out such that the resulting active silicic acid solution may be at pH 1 to 5, more preferably pH 2 to 4.

The method for mixing the alkali silicate or active silicic acid with titanium oxide nanoparticles is, for example, by gradually adding an aqueous solution of alkali silicate or active silicic acid to a dispersion of titanium oxide nanoparticles although the method is not particularly limited.

The silicon oxide shells preferably account for 5 to 50%, more preferably 10 to 45%, and even more preferably 15 to 40% by weight based on the overall core/shell tetragonal titanium oxide solid solution. If the silicon oxide proportion is less than 5 wt%, then shell formation may be insufficient. If the silicon oxide proportion exceeds 50 wt%, then the core/shell nanoparticles tend to agglomerate together, rendering the dispersion opaque.

It is noted that the titanium oxide used herein may be further doped with a metal other than tin and manganese.

The term "doping" is used in a broad sense and encompasses both simple doping and doping via a chemical bond.

The diameter (average cumulative particle size) of core/shell nanoparticles may be measured by a variety of methods.

A 50% cumulative diameter ($D_{50}$) in a volume basis particle size distribution as measured by the dynamic light scattering method using laser light is used herein, but observation by electron microscopy is possible as supporting evidence. Although the value obtained by such measurement method is not dependent on a particular measurement system, for example, Nanotrac UPA-EX150 (Nikkiso Co., Ltd.) may be used in the dynamic light scattering method. Also, transmission electron microscope H-9500 (Hitachi High-Technologies Ltd.), for example, is used in the electron microscopy.

Since it is important that the cured film of the inventive coating composition be transparent in the visible region, the core/shell nanoparticles should preferably have an average cumulative particle size ($D_{50}$) of 1 to 200 nm, more preferably 1 to 100 nm, even more preferably 1 to 80 nm, and most preferably 1 to 50 nm. If the core/shell nanoparticles have a $D_{50}$ in excess of 200 nm, which is greater than the wavelength of the visible region, sometimes noticeable scattering occurs. If $D_{50}$ is less than 1 nm, the core/shell nanoparticles have an extremely large overall surface area in the system, indicating difficult handling of particles.

Also for the purpose of enhancing the affinity of core/shell nanoparticles to the room temperature curable resin or organic solvent, the silicon oxide shell at surfaces of core/shell nanoparticles may be surface treated with organosilyl groups via siloxane bonds.

The organosilyl groups may be introduced, for example, by modifying surfaces of core/shell nanoparticles with a silane compound having the general formula (I), a (co)hydrolytic condensate of the silane compound, or a mixture thereof.

$$R^1{}_mSi(Y)_{4-m} \qquad (I)$$

Herein $R^1$ which may be the same or different is hydrogen or a substituent group selected from the group consisting of a $C_1$-$C_{20}$ alkyl group which may be substituted with (meth)acrylic, oxiranyl, amino, mercapto, isocyanate or fluorine, a $C_2$-$C_{20}$ alkenyl group, a $C_6$-$C_{20}$ aryl group, and a (poly)dimethylsiloxy group of up to 50 silicon atoms, Y is a substituent group selected from the group consisting of alkoxy, acetoxy, enol, hydroxyl and chlorine, and m is an integer of 1 to 3.

Of the alkyl groups, $C_1$-$C_6$ alkyl groups are preferred, with methyl, ethyl and n-propyl being more preferred.

Of the alkenyl groups, $C_2$-$C_6$ alkenyl groups are preferred, with vinyl and allyl being more preferred.

Of the aryl groups, $C_6$-$C_{10}$ aryl groups are preferred, with phenyl being more preferred.

The (poly)dimethylsiloxy groups preferably have 1 to 50 silicon atoms, more preferably 1 to 30 silicon atoms.

Suitable alkoxy groups include methoxy, ethoxy, n-propoxy and n-butoxy, with methoxy being preferred.

Examples of the silane compound having formula (I) wherein m=1 include alkoxysilanes such as hydrogentrimethoxysilane, hydrogentriethoxysilane, methyltrimethoxysilane, methyltriethoxysilane, methyltriisopropoxysilane, ethyltrimethoxysilane, ethyltriethoxysilane, ethyltriisopropoxysilane, propyltrimethoxysilane, propyltriethoxysilane, propyltriisopropoxysilane, phenyltrimethoxysilane, vinyltrimethoxysilane, allyltrimethoxysilane, γ-methacryloxypropyltrimethoxysilane, γ-methacryloxypropyltriethoxysilane, γ-acryloxypropyltrimethoxysilane, γ-glycidoxypropyltrimethoxysilane, γ-glycidoxypropyltriethoxysilane, β-(3,4-epoxycyclohexyl)ethyltrimethoxysilane, γ-chloropropyltrimethoxysilane, 3,3,3-trifluoropropyltrimethoxysilane, 3,3,3-trifluoropropyltriethoxysilane, perfluorooctylethyltrimethoxysilane, γ-mercaptopropyltrimethoxysilane, γ-aminopropyltrimethoxysilane, γ-aminopropyltriethoxysilane, N-(2-aminoethyl)aminopropyltrimethoxysilane, γ-isocyanatopropyltrimethoxysilane, γ-isocyanatopropyltriethoxysilane, phenyltrimethoxysilane, phenyltriethoxysilane, tris(3-trimethoxysilylpropyl)isocyanurate in which isocyanate radicals bond together, tris(3-triethoxysilylpropyl)isocyanurate, partial hydrolytic condensates of methyltrimethoxysilane, commercially available under the trade name of KC-89S and X-40-9220 from Shin-Etsu Chemical Co., Ltd., and partial hydrolytic condensates of methyltrimethoxysilane and γ-glycidoxypropyltrimethoxysilane, commercially available under the trade name of X-41-1056 from Shin-Etsu Chemical Co., Ltd.; allylsilanes such as triallylmethylsilane, triallylethylsilane, and triallylisopropylsilane; acetoxysilanes such as triacetoxymethylsilane, triacetoxyethylsilane, triacetoxypropylsilane, and triacetoxyphenylsilane; chlorosilanes such as trichloromethylsilane, trichloroethylsilane, trichloropropylsilane, and trichlorophenylsilane; and enolsilanes such as triisopropenyloxymethylsilane, ethyltriisopropenyloxysilane, triisopropenyloxypropylsilane, and phenyltriisopropenyloxysilane.

Examples of the silane compound having formula (I) wherein m=2 include methylhydrogendimethoxysilane, methylhydrogendiethoxysilane, dimethyldimethoxysilane, dimethyldiethoxysilane, methylethyldimethoxysilane, diethyldimethoxysilane, diethyldiethoxysilane, methylpropyldimethoxysilane, methylpropyldiethoxysilane, diisopropyldimethoxysilane, phenylmethyldimethoxysilane, vinylmethyldimethoxysilane, γ-glycidoxypropylmethyldimethoxysilane, γ-glycidoxypropylmethyldiethoxysilane, β-(3,4-epoxycyclohexyl)ethylmethyldimethoxysilane, γ-methacryloxypropylmethyldimethoxysilane, γ-methacryloxypropylmethyldiethoxysilane, γ-mercaptopropylmethyldimethoxysilane, γ-aminopropylmethyldiethoxysilane, and N-(2-aminoethyl)aminopropylmethyldimethoxysilane.

Examples of the silane compound having formula (I) wherein m=3 include trimethylmethoxysilane, trimethylethoxysilane, triethylmethoxysilane, n-propyldimethylmethoxysilane, n-propyldiethylmethoxysilane, isopropyldimethylmethoxysilane, isopropyldiethylmethoxysilane, propyldimethylethoxysilane, n-butyldimethylmethoxysilane, n-butyldimethylethoxysilane, n-hexyldimethylmethoxysilane, n-hexyldimethylethoxysilane, n-pentyldimethylmethoxysilane, n-pentyldimethylethoxysilane, n-hexyldimethylmethoxysilane, n-hexyldimethylethoxysilane, n-decyldimethylmethoxysilane, and n-decyldimethylethoxysilane.

Examples of the silane compound having formula (I) wherein $R^1$ is (poly)dimethylsiloxane include compounds having the general formula (II) shown below.

In formula (II), n is preferably an integer of 0 to 50, more preferably 5 to 40, even more preferably 10 to 30. If n is more than 50, silicone oil nature becomes so stronge that the dissolution of the surface treated organosol in various resins is limited in some cases. The compound of formula (II) wherein n=30 as average structure is available under the trade name X-24-9822 from Shin-Etsu Chemical Co., Ltd.

[Chem. 1]

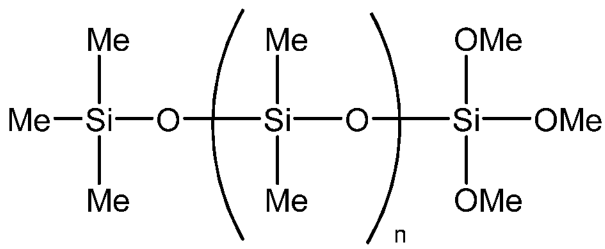

(II)

Herein Me stands for methyl.

The silane compounds for surface treatment may be used alone, as a mixture of two or more compounds, or as a cohydrolytic condensate of two or more compounds. Also, the core/shell nanoparticles may be surface treated stepwise with the silane compound(s) of the same or different types.

The amount of the silane compound used is preferably 0.5 to 50 times, more preferably 1 to 25 times, even more preferably 2 to 10 times the weight of the core/shell nanoparticles. If the amount exceeds 50 times, gelation may occur. If the amount is less than 0.5 time, agglomeration may occur as a result of short coverage.

The surface treatment with the silane compound is preferably carried out using a colloidal dispersion of the core/shell nanoparticles in water as dispersing medium.

The colloidal dispersion should preferably have a dispersoid concentration of 1 to 35% by weight, more preferably 5 to 30% by weight, even more preferably 10 to 25% by weight, as considered from the standpoints of increasing production efficiency and preventing gelation.

The dispersing medium may contain a monohydric alcohol which is miscible with water in an arbitrary ratio in the step of preparing the water dispersed colloidal solution. The monohydric alcohol which is miscible with water in an arbitrary ratio may be the co-solvent used during preparation of the core/shell nanoparticles or a hydrolytic byproduct of a metal alkoxide in the sol-gel reaction.

Examples of the monohydric alcohol which is miscible with water in an arbitrary ratio include methanol, ethanol, 1-propanol and 2-propanol.

Further, during the surface treatment, the reaction solution may be diluted with an organic solvent if necessary.

Examples of the diluting solvent include monohydric alcohols such as methanol, ethanol, 1-propanol, 2-propanol and 1-butanol; polyhydric alcohols such as ethylene glycol, propylene glycol and glycerol; ethers such as propylene glycol monomethyl ether, ethylene glycol monomethyl ether, glyme and diglyme; ketones such as acetone and methyl isobutyl ketone; esters such as ethyl acetate and propylene glycol monomethyl ether acetate; and reactive esters such as hexanediol diacrylate, trimethylolpropane triacrylate, pentaerythritol tetraacrylate, and dipentaerythritol hexaacrylate. Of these, ethanol and 2-propanol are preferred.

In the practice of surface treatment, the silane compound may be added to the water dispersed colloidal solution by any techniques such as dropwise addition in liquid, dropwise addition out of liquid, and addition in portions, with the dropwise addition in liquid being preferred.

The temperature at which the silane compound is added is preferably 0 to 45°C, more preferably 5 to 40°C, even more preferably 10 to 35°C, as considered from the aspect of preventing alteration of the colloidal water dispersion and incidental hydrolytic condensation of the silane compound. There is a likelihood that the temperature of the reaction solution rises to near or below 70°C by the reaction heat of hydrolytic condensation.

In the practice of surface treatment, an acid or base catalyst may be added for the purpose of promoting the

reaction, if necessary.

Suitable base catalysts include potassium hydroxide, sodium hydroxide, potassium carbonate, sodium carbonate, and basic ion exchange resins.

Suitable acid catalysts include hydrochloric acid, sulfuric acid, methanesulfonic acid, trifluoromethanesulfonic acid, acetic acid, and cationic ion exchange resins.

Exemplary of the cationic ion exchange resins are Amberlite (Organo Corp.), Lewatit (Lanxess), Purolite (Purolite), and Muromac (Muromachi Chemicals Inc.).

The catalyst is preferably used in an amount of 0.01 to 20% by weight, more preferably 0.1 to 10% by weight, even more preferably 1 to 5% by weight based on the core/shell nanoparticles, from the aspect of properly controlling the reaction rate.

The introduction of organosilyl groups to the surface of core/shell nanoparticles is observable by performing IR spectroscopy or solid NMR spectroscopy analysis and confirming peaks characteristic of organosilyl.

The amount of organosilyl groups introduced may be estimated from the difference between a percent weight loss of core/shell nanoparticles prior to reaction with organosilyl groups and a percent weight loss of surface-treated nanoparticles having organosilyl groups. The amount of organosilyl groups introduced is preferably at least 2% by weight based on the surface-treated nanoparticles, from the aspect of rendering the nanoparticles dispersible in an organic solvent.

After the surface treatment with the silane compound as discussed above, the dispersing medium in the reaction solution may be replaced by a polar organic solvent, if necessary. In particular, exudation of the dispersing medium from the dispersion, and replacement and concentration of the dispersing medium are preferably performed by ultrafiltration. In this way, the solid concentration of the dispersion in a filtration chamber is adjusted to preferably 1 to 30% by weight, more preferably 5 to 25% by weight, even more preferably 10 to 20% by weight.

The dispersing medium contains water in the water dispersed colloidal solution, alcohols derived from silicates formed by hydrolytic condensation of the silicon compound added or the hydrolytic condensate thereof, an optionally added monohydric alcohol, and other organic solvents.

For the ultrafiltration of the dispersing medium which is a complex mixture as mentioned above, a porous ceramic filter is preferably used.

Specifically, a filter including an inorganic ceramic membrane having an average pore size of preferably 5 nm to less than 20 nm, more preferably 6 nm to 18 nm, and most preferably 7 nm is used. The filter is preferably configured as a rotatable disk.

The porous inorganic ceramic membrane may be prepared by any well-known techniques. The materials of which the porous inorganic ceramic membrane is made include spinel, alumina, titania and zirconia base materials. For example, the spinel base material may be synthesized by the known technique (Ueno, S. et al., Journal of Physics: Conference Series 2009, Vol. 165, No. 1, Fabrication of porous magnesium spinel with cylindrical pores by unidirectional solidification, or Zhang, Guo-Chang, et al., 2000, Vol. 2000, No. 03, $MgAl_2O$ Ultrafiltration Ceramic Membrane Derived from Mg-A1 Double Alkoxide).

Preferably the pore size is controlled by adjusting synthesis conditions and the growth of spinel crystal.

The filter is preferably formed by depositing a surface layer having a uniform pore size on a porous disk-shaped unglazed ceramic plate of alumina or the like, by the sol-gel method and epitaxial growth.

The porous disk-shaped unglazed ceramic plate of alumina used herein is typically one having a pore size of 0.05 to 1 μm.

The surface layer has an average pore size of preferably 5 nm to less than 20 nm, more preferably 6 nm to 18 nm, and most preferably 7 nm. The pore size of the filter is preferably determined by electron microscopy. The electron microscope used to this end may be a scanning electron microscope, transmission electron microscope or atomic force microscope.

With respect to the size of the disk-shaped filter, its diameter is preferably 100 mm to less than 500 mm, more preferably 120 mm to 300 mm, and even more preferably 140 mm to 200 mm. If the diameter is less than 100 mm, a certain surface area is not ensured, and little shear stress is applied upon rotation. If the diameter exceeds 500 mm, an extra torque may be required for rotation and a filter with too large a diameter is fragile and difficult to handle.

The thickness of the filter is preferably 1 mm to less than 10 mm, more preferably 3 mm to 5 mm, when it is considered to insure mechanical strength and the volume of the filtration chamber.

The filter may be fabricated by the well-known technique, or commercially available filters may be used.

The dispersing medium is exudated under a static pressure of preferably less than 0.5 MPa, more preferably up to 0.4 MPa, even more preferably up to 0.3 MPa, and most preferably 0.03 to 0.2 MPa, in consideration of a simple choice of the interface for the ultrafiltration system and efficient exudation of the dispersing medium.

The static pressure is preferably achieved by hydraulic pressure or compression pneumatic pressure, using a hydraulic head tube whose surface is in contact with air or a closed system. Especially the compression pneumatic pressure system is preferred because the unit is compact. Compression air may be readily produced by any well-known

techniques or commercially available compressors.

In replacement of the dispersing medium, a shear stress of preferably 0.1 to 10 Pa, more preferably 0.5 to 5 Pa, and even more preferably 1 to 5 Pa is applied to the disk-shaped filter. The shear stress may be achieved by fluidization of the dispersion or by rotation of the disk-shaped filter. Desirably the shear stress is achieved by rotation of the filter because a high shear rate is available at the filter surface.

The shear stress may be computed from the wall-to-wall distance in the filtration chamber and the rotational speed. If necessary, the filtration chamber may be equipped with an appropriate baffle for the purpose of reducing the wall-to-wall distance in the filtration chamber. It is a well-known practice that the shear stress is increased by utilizing rotation and baffle.

A maximum shear stress ($\tau$) acting on a circumference may be computed, for example, according to equation (1):

$$\tau = (\eta \cdot \pi \cdot \phi \cdot \omega) / L \text{ [Pa]} \qquad \text{equation (1)}$$

wherein $\phi$ is a diameter (m) of the disk-shaped filter, $\omega$ is a rotational speed (rps) of the filter, L is a wall-to-wall distance (m) between filter and filtration chamber, $\pi$ is circle ratio, and $\eta$ is a viscosity (Pa·s) of the dispersion.

Assuming an example wherein diameter $\phi$ = 0.15 m, filter rotational speed $\omega$ = 16.7 rps (≅1,000 rpm), circle ratio $\pi$ = 3.14, dispersion viscosity $\eta$ = 0.001 Pa·s, and wall distance L = 0.003 m, then $\tau = (0.001\times3.14\times0.15\times16.7) / 0.003 \cong 2.6$ Pa. The shear stress may be controlled to fall in the preferred range by changing parameters $\phi$, $\omega$ and L.

The rotational energy applied to the dispersion is preferably prescribed by the shear stress, but may also be prescribed by a fluid state.

The fluid state may be prescribed by Reynolds number. The agitation Reynolds number is preferably 3,000 to 5,000,000, more preferably 5,000 to 1,000,000, and even more preferably 10,000 to 500,000, when it is taken into account that dispersion efficiency is increased by preventing laminar flow agitation and production efficiency is increased by properly controlling the amount of energy required for agitation.

The Reynolds number (Re) may be determined from equation (2):

$$Re = \rho \cdot \omega \cdot \phi^2 / \eta \qquad \text{equation (2)}$$

wherein $\rho$ is a density (kg/m$^3$), $\omega$ is a rotational speed (rps), $\phi$ is a filter diameter (m) and $\eta$ is a viscosity (Pa.s).

The core/shell nanoparticle dispersion used herein preferably has a density $\rho$ of 900 to 2,000 kg/m$^3$, more preferably 1,000 to 1,500 kg/m$^3$, and a viscosity $\eta$ of 0.001 to 0.05 Pa·s, more preferably 0.002 to 0.01 Pa·s.

For example, when a core/shell nanoparticle dispersion with $\rho$ = 1,000 kg/m$^3$ and $\eta$ = 0.001 Pa·s is treated by a disk-shaped filter having $\phi$ = 0.15 m at $\omega$ = 16.7 rps, Re is computed to be ~$3.8\times10^5$. Re can be adjusted to fall in the desired range by an appropriate choice of $\omega$ and $\phi$.

For the purpose of improving agitation efficiency, a reactor equipped with a baffle may be used.

The temperature at which the dispersing medium is replaced is preferably 5 to 80°C, more preferably 10 to 60°C, even more preferably 15 to 50°C, and most preferably 20 to 40°C, from the standpoint of preventing freezing or volatilization of the dispersing medium and gelation or fault when a reactive ester is used.

In general, the viscosity of the dispersion depends on the temperature. Since the viscosity affects rotational torque, the temperature is preferably adjusted so that any extra load may not be applied to an electromagnetic rotating machine and/or motor.

In replacement of the dispersing medium, it is also possible to remove unreacted compounds and by-products by continuous ultrafiltration, if necessary.

Examples of the organic solvent used in the dispersing medium replacement include mono- and polyhydric alcohols such as methanol, ethanol, 1-propanol, 2-propanol, cyclopentanol, ethylene glycol, propylene glycol, β-thiodiglycol, butylene glycol and glycerol; ethers such as diethyl ether, dipropyl ether, cyclopentyl methyl ether, ethylene glycol dimethyl ether, diethylene glycol dimethyl ether, triethylene glycol dimethyl ether, ethylene glycol monomethyl ether, ethylene glycol monoethyl ether, ethylene glycol monopropyl ether, ethylene glycol monobutyl ether, propylene glycol monomethyl ether, propylene glycol monoethyl ether, propylene glycol monopropyl ether, propylene glycol monobutyl ether, butylene glycol monomethyl ether, butylene glycol monoethyl ether, butylene glycol monopropyl ether, and butylene glycol monobutyl ether; esters such as methyl formate, ethyl formate, propyl formate, butyl formate, methyl acetate, ethyl acetate, propyl acetate, butyl acetate, methyl propionate, ethyl propionate, propyl propionate, butyl propionate, methyl butyrate, ethyl butyrate, propyl butyrate, butyl butyrate, methyl benzoate, ethyl benzoate, propyl benzoate, butyl benzoate, dimethyl oxalate, diethyl oxalate, dipropyl oxalate, dibutyl oxalate, dimethyl malonate, diethyl malonate, dipropyl malonate, dibutyl malonate, ethylene glycol diformate, ethylene glycol diacetate, ethylene glycol dipropionate, ethylene glycol dibutyrate, propylene glycol diacetate, propylene glycol dipropionate, propylene glycol dibutyrate, ethylene glycol methyl ether acetate, propylene glycol methyl ether acetate, butylene glycol monomethyl ether acetate, ethylene glycol ethyl ether acetate, propylene glycol ethyl ether acetate, and butylene glycol monoethyl ether acetate; ketones such as acetone, diacetone alcohol, diethyl ketone, methyl ethyl ketone, methyl isobutyl ketone, methyl n-butyl ketone, dibutyl ketone, cyclopentanone, cyclohexanone, cycloheptanone, and cyclooctanone; and amides such as dimethylformamide, dimethylacetamide, tetraacetylethylenediamide, tetraacetylhexamethylenetetramide, and N,N-dimethylhexamethylenediamine diacetate.

Of these, methanol, ethanol, 1-propanol, 2-propanol, and propylene glycol monomethyl ether are preferred for dispersion of core/shell nanoparticles and ease of distillation of the dispersing medium.

A volume of the organic solvent used in the solvent replacement is preferably 1 to 20 times, more preferably 2 to 10 times, and even more preferably 3 to 8 times the volume of the filtration chamber, when the efficiency of replacement of the dispersing medium and production efficiency are taken into account.

[3] Coating composition

The coating composition of the invention contains the room temperature curable resin and the core/shell nanoparticles, both defined above.

In the coating composition, the core/shell nanoparticles are present in an amount of 0.1 to 50 parts by weight, preferably 1 to 20 parts by weight per 100 parts by weight of the room temperature curable resin, in consideration of the UV absorptivity of the cured film thereof and the dispersibility of nanoparticles.

In the embodiment wherein the room temperature curable resin is a solvent-containing composition, the amount of the core/shell nanoparticles blended is determined, based on the resin component in the composition which is 100 parts by weight.

In the embodiment wherein the core/shell nanoparticles are used as a dispersion, the dispersion is blended such that the solid content thereof may fall in the above-defined range per 100 parts by weight of the room temperature curable resin.

In addition to the above-mentioned components, the coating composition of the invention may further contain particles of metal oxide or metal complex oxide such as aluminum oxide, cerium oxide, titanium oxide, zinc oxide, indium tin oxide, zirconium oxide, tin oxide, iron oxide, or silicon oxide, for the purpose of imparting mechanical properties, UV shielding ability or electroconductivity.

For the purpose of imparting mechanical properties, silicon oxide, aluminum oxide, tin oxide, boron oxide and a complex oxide containing at least one of the metal elements thereof are advantageously used.

For the purpose of imparting UV shielding ability, titanium oxide, zinc oxide and cerium oxide are advantageously used.

For the purpose of imparting conductivity, indium oxide-tin oxide complex is advantageously used.

For the purpose of imparting at least two of these properties, metal oxides or metal complex oxides of arbitrary types may be used in combination.

The amount of the metal oxide blended is preferably 0.1 to 50 parts by weight, more preferably 1 to 20 parts by weight per 100 parts by weight of the room temperature curable resin.

Any well-known antioxidants such as 2,6-di-t-butyl-4-methylphenol may be blended in the coating composition for the purpose of preventing coloration, white turbidity or oxidative degradation thereof.

Further, inorganic fillers such as fumed silica may be blended in the coating composition for the purpose of improving film strength as long as the transparency of a cured film of the composition is not affected. If necessary, dyes, pigments, flame retardants, leveling agents and other additives may be blended.

These components may be used alone or in admixture.

The coating composition may be prepared by mixing the room temperature curable resin, core/shell nanoparticles, and optional additives in an arbitrary order.

A coated article is obtained by coating the coating composition onto the surface of a substrate and curing the composition to form a coating layer.

The coating layer may be formed on only one surface or on all surfaces of a substrate. In the case of a plate-shaped substrate, for example, the coating layer may be formed on at least one surface thereof.

The substrate used herein is not particularly limited and includes molded plastics, wood items, ceramics, glass, metals, and composites thereof.

These substrates which have been surface treated, specifically by conversion treatment, corona discharge treatment, plasma treatment, acid or alkaline treatment are also useful. Also included are laminated substrates comprising a substrate and a surface layer formed thereon from a coating material of different type from the substrate.

Also, the coating composition may be applied onto the surface of a substrate having another functional layer preformed thereon.

Examples of the other functional layer include a primer layer, rust-preventive layer, gas-barrier layer, water-proof layer, and heat ray-shielding layer, and one or more layers thereof may be previously formed on the substrate.

The coated article having a film of the coating composition on one surface may be coated on the opposite surface with one or more layers selected from a hard coat layer, rust-preventive layer, gas barrier layer, water-proof layer, heat ray-shielding layer, antifouling layer, photocatalyst layer, and antistatic layer.

The coating composition may be applied to the substrate by any of well-known coating techniques. Suitable coating techniques include brush coating, spray coating, dipping, flow coating, roll coating, curtain coating, spin coating, and knife coating.

The coating composition is curable at a temperature of about 0°C to about 40°C, preferably about 5°C to about 35°C. A cured film forms preferably after holding at 25°C for 12 hours, more preferably at 25°C within 5 hours.

It is acceptable for the purpose of reducing the cure time to heat at a temperature in the range that does not adversely affect the substrate or the like.

The film (coating layer) preferably has a thickness of 0.1 to 100 μm, more preferably 1 to 50 μm although the thickness is not particularly limited. A thickness within this range meets both development of long-term stable adhesion and suppression of film cracking.

A film or coating formed of the inventive coating composition is characterized by weather resistance.

Weather resistance is evaluated by a weather resistance test on the cured film as a change of outer appearance of the film.

In the weather resistance test, a change of outer appearance of the film may be evaluated by using EYE UV ozone decomposition system OCA-150L-D (Iwasaki Electric Co., Ltd.) or EYE Super UV tester W-151 (Iwasaki Electric Co., Ltd.), for example, irradiating UV radiation for a predetermined time, and measuring a change of color difference ($\Delta E^*$) of the film.

The color difference may be measured by a chromaticity meter Z-300A (Nippon Denshoku Industries Co., Ltd.), for example. The color difference is preferably up to 10, more preferably up to 5, even more preferably up to 2. If the color difference exceeds 10, the color change is at a visually observable level of discoloration.

Yellowing resistance may be determined in terms of yellowness index of a coated article. The yellowness index is measured by a chromaticity meter Z-300A (Nippon Denshoku Industries Co., Ltd.), for example. Provided that $YI^0$ is an initial yellowness index and $YI^1$ is a yellowness index after the test, a difference of weathering yellowness index is determined as $\Delta YI' = YI^1 - YI^0$. The difference of weathering yellowness index

($\Delta YI' = YI^1 - YI^0$) is preferably up to 10, more preferably up to 8, and even more preferably up to 5. A $\Delta YI'$ value in excess of 10 is undesirable because of an advance of yellowing, degradation of the substrate, and worsening of aesthetic appearance.

In the weathering test, any environment of test conditions may be selected. An accumulative UV energy quantity of 1,500 MJ/m$^2$ corresponds to outdoor exposure over about 10 years.

The correlation of test conditions to outdoor exposure may be readily estimated. For example, an outdoor UV illuminance is $1 \times 10^1$ W/m$^2$, when measured at noon on fine Vernal Equinox Day at Matsuida, Annaka City, Gunma Pref., Japan, using a UV illuminometer (EYE UV illuminometer UVP365-1 by Iwasaki Electric Co., Ltd.). Assume that the annual average daily sunshine time is 12 hours, the accumulative illuminance is 12 (h/day) $\times$ 365 (day/year) $\times$ 10 (year) $\times$ 10 (W/m$^2$) = 438 (kWh/m$^2$) $\cong$ 1,500 (MJ/m$^2$).

When the facts that the outdoor environment depends on the latitude and weather, and the weathering test uses an artificial environment are taken into account, it is reasonable that an approximation of 1,500 MJ corresponds to outdoor exposure over 10 years. The test conditions may be changed depending on a particular environment where the cured film is used.

## EXAMPLES

Examples and Comparative Examples are given below for further illustrating the invention, but the invention is not limited thereto.

### [1] Preparation of core/shell nanoparticle dispersion

### [Synthesis Example 1] Preparation of core/shell nanoparticle water dispersion TW-1

An inorganic oxide colloidal water dispersion was prepared which contained core/shell nanoparticles each consisting of a core in the form of tetragonal titanium oxide nanoparticle having tin and manganese incorporated in solid solution and a shell of silicon oxide as a dispersoid and water as a dispersing medium.

A dispersion of core nanoparticles was first prepared, followed by hydrolytic condensation of tetraethoxysilane, yielding a colloidal solution containing core/shell nanoparticles.

To 66.0 g of 36 wt% titanium(IV) chloride aqueous solution (trade name TC-36 by Ishihara Sangyo Kaisha,

Ltd.) were added 3.3 g of 50% tin(IV) chloride solution (Nihon Kagaku Sangyo Co., Ltd.) and 0.1 g of manganese(II) monoxide (Kojundo Chemical Lab. Co., Ltd.). They were thoroughly mixed and diluted with 1,000 g of deionized water. In this metal salt aqueous solution, the molar ratios of Ti to Sn and Mn were Ti/Sn = 20 and Ti/Mn = 100.

To the metal salt aqueous solution, 300 g of 5 wt% aqueous ammonia (Wako Pure Chemical Industries, Ltd.) was gradually added for neutralization and hydrolysis, yielding a precipitate of titanium hydroxide containing tin and manganese. This titanium hydroxide slurry was at pH 8.

The precipitate of titanium hydroxide was deionized by repeating deionized water addition and decantation. To the precipitate of titanium hydroxide containing tin and manganese after deionization, 100 g of 30 wt% aqueous hydrogen peroxide (Wako Pure Chemical Industries, Ltd.) was gradually added, whereupon stirring was continued at 60°C for 3 hours for full reaction. Thereafter, deionized water was added for concentration adjustment, yielding a semi-transparent solution of tin and manganese-containing peroxotitanic acid (solids concentration 1 wt%).

An autoclave of 500 mL volume (TEM-D500 by Taiatsu Techno Co., Ltd.) was charged with 350 mL of the peroxotitanic acid solution synthesized above, which was subjected to hydrothermal reaction at 200°C and 1.5 MPa for 240 minutes. The reaction mixture in the autoclave was taken out via a sampling tube to a vessel in water bath at 25°C whereby the mixture was rapidly cooled to quench the reaction, obtaining a dispersion (i) of titanium oxide solid solution nanoparticles. The titanium oxide solid solution nanoparticle dispersion was dried at 105°C for 24 hours into a powder, which was analyzed by powder X-ray diffractometer (D2 Phaser by Bruker AXS) to find that the crystalline phase was of rutile type (tetragonal).

A separable flask equipped with a magnetic stirrer and thermometer was charged with 1,000 parts by weight of the titanium oxide dispersion (i), 100 parts by weight of ethanol, and 2.0 parts by weight of ammonia at room temperature (25°C), followed by magnetic stirring. The separable flask was placed in an ice bath and cooled until the temperature of the contents reached 5°C. 18 parts by weight of tetraethoxysilane (trade name KBE-04 by Shin-Etsu Chemical Co., Ltd.) was added to the separable flask, which was mounted in μReactor EX (Shikoku Instrumentation Co., Inc.) where microwave was applied at a frequency 2.45 GHz and a power 1,000 W for 1 minute while magnetic stirring was continued. The thermometer was monitored during the microwave heating step, confirming that the temperature of the contents reached 85°C. The resulting mixture was filtered by filter paper (Advantec 2B), obtaining a thin colloidal solution. The thin colloidal solution was concentrated to 8.8% by weight by ultrafiltration, yielding a water dispersion (TW-1) of core/shell nanoparticles. The volume basis 50% cumulative distribution diameter ($D_{50}$) of TW-1 was measured by the dynamic light scattering method (model Nanotrac by Nikkiso Co., Ltd.), finding a $D_{50}$ of 17.9 nm. The proportion of shell silicon oxide was 18.0% by weight of $SiO_2$ based on the overall core/shell nanoparticles.

[Synthesis Example 2] <u>Preparation of core/shell nanoparticle PGM dispersion TPG-1</u>

A four neck 2-L separable flask equipped with a Dimroth condenser, nitrogen inlet tube, thermometer and impeller was charged with 300 g of core/shell nanoparticle water dispersion (TW-1, solid concentration 8.8 wt%) prepared in Synthesis Example 1 and 3 g of sulfonic acid base cationic ion exchange resin as catalyst. Then 225 g of methyltrimethoxysilane (trade name KBM-13 by Shin-Etsu Chemical Co., Ltd.) was added to the flask, followed by rigorous stirring at 250 rpm. The behavior that by stirring, the dispersion reacted with the alkoxysilane and turned uniform was observed. It was also observed that the temperature of the dispersion rose from 25°C to 52°C.

The dispersion was heated and stirred for 2 hours so that its temperature reached 50°C. With stirring at 250 rpm, 750 g of ethanol was added to the dispersion for dilution. The diluted dispersion was fed to a ultrafilter, from which 800 g of an exudate was taken out. The organic solvent (ethanol) was continuously supplied under pressure to the concentrated dispersion, during which the exudation behavior of the dispersion was observed. With the filter exit coupled to a receptacle (5,000 mL), the pressure supply of ethanol was continued until the exudate reached 800 g. The dispersion was taken out of the filtration chamber, obtaining an ethanol dispersion of titanium oxide nanoparticles (TE-1). TE-1 had a solids concentration of 9.2 wt% and a water concentration of 1.1 wt%. The diameter ($D_{50}$) of TE-1 was measured by the dynamic light scattering method (model Nanotrac by Nikkiso Co., Ltd.), finding a $D_{50}$ of 9.9 nm.

The dispersion TE-1, 200 g, was placed in a distilling flask. While the dispersion was stirred with a magnetic stirrer at 700 rpm, 250 g of propylene glycol monomethyl ether (PGM by Nippon Nyukazai Co., Ltd.) as organic solvent was added. After addition of the organic solvent, the reaction solution showed a uniform transparent state. Subsequently, the contents were heated for distillation under a pressure of 760 mmHg. Distillation took place at the point of time when the flask internal temperature reached about 85°C. Distillation was continued until the distillate amount reached 315 g. The internal temperature at the end of distillation was about 120°C. The resulting dispersion had a solids concentration of 14.5 wt% and a water concentration of 0.12 wt%. Further dehydration through molecular sieve 4A (Kanto Chemical Co., Ltd.) yielded a PGM dispersion of core/shell nanoparticles (TPG-1).

[2] Preparation of coating composition

[Example 1]

A coating composition containing core/shell nanoparticles was prepared by mixing 1 g of the core/shell nanoparticles water dispersion (TW-1, solids concentration 8.8 wt%) obtained in Synthesis Example 1 with 10 g of an aqueous emulsion type coating composition of silicone-modified acrylic resin (clear aqueous multipurpose color paint by Asahipen Corp.). It was confirmed that the core/shell nanoparticles were dispersed in the aqueous emulsion type coating composition without agglomeration.

[Example 2]

A coating composition containing core/shell nanoparticles was prepared by mixing 1 g of the core/shell nanoparticles PGM dispersion (TPG-1, solids concentration 14.5 wt%) obtained in Synthesis Example 2 with 10 g of a solventless coating composition of silicone resin (KR-400 by Shin-Etsu Chemical Co., Ltd.). It was confirmed that the core/shell nanoparticles were dispersed in KR-400 without agglomeration.

[Example 3]

A coating composition containing core/shell nanoparticles was prepared by mixing 1 g of the core/shell nanoparticles PGM dispersion (TPG-1, solids concentration 14.5 wt%) obtained in Synthesis Example 2 with 10 g of an organic coating composition of urethane resin (oily varnish by Washin Paint Co., Ltd.). It was confirmed that the core/shell nanoparticles were dispersed in the organic coating composition of urethane resin without agglomeration.

[Comparative Example 1]

A coating composition containing titanium oxide was prepared by mixing 0.12 g of a titanium oxide dispersion (Hombitec RM223LP, Sachtleven Chemie GmbH, $D_{50}$ = 22 nm, dispersing medium: dipropylene glycol methyl ether, solids concentration: 42 wt%) with 5 g of a solventless coating composition of silicone resin (KR-400 by Shin-Etsu Chemical Co., Ltd.). There was observed white turbidity caused by agglomeration of titanium oxide in the silicone resin.

In all the coating compositions prepared in Examples 1 to 3, neither agglomeration of core/shell nanoparticles nor white turbidity was observed. It was confirmed that core/shell nanoparticles were uniformly dispersed in the coating composition.

[3] Preparation of cured film

[Example 4]

The coating composition prepared in Example 1 was applied to a quartz substrate by means of bar coater #8 and kept at 25°C for 3 hours, yielding a cured film. The UV/Vis absorption spectrum of the coated substrate is shown in FIG. 1.

[Example 5]

The coating composition prepared in Example 2 was applied to a quartz substrate by means of bar coater #8 and kept at 25°C for 3 hours, yielding a cured film. The UV/Vis transmission spectrum of the coated substrate is shown in FIG. 2.

[Example 6]

The coating composition prepared in Example 3 was applied to a quartz substrate by means of bar coater #8 and kept at 25°C for 3 hours, yielding a cured film. The UV/Vis transmission spectrum of the coated substrate is shown in FIG. 3.

[Comparative Example 2]

The coating composition prepared in Comparative Example 1 was applied to a quartz substrate by means of bar coater #8 and kept at 25°C for 3 hours, yielding a cured film. The UV/Vis transmission spectrum of the coated

substrate is shown in FIG. 4.

As seen from FIGS. 1 to 3, the cured films (Examples 4 to 6) of the coating compositions of Examples 1 to 3 have both visible light transparency and UV shielding properties.

As seen from FIG. 4, the cured film (Comparative Example 2) of the coating composition prepared using commercially available titanium oxide particle dispersion in Comparative Example 1 has poor transparency and substantially no UV-shielding ability as demonstrated by a light transmittance in the visible region of up to 80% and no significant change of a light transmittance in the UV region from that in the visible region.

It is understood from these results that coating compositions within the scope of the invention do not impair the transparency of coating compositions based on various organic resins and have a high UV shielding ability.

Accordingly, the use of coating compositions within the scope of the invention suppresses UV-promoted degradation of substrate materials while maintaining the properties of coating compositions based on various organic resins.

[Example 7]

A red aqueous acrylic paint based on acrylic resin (Hapio Color by Kanpe Hapio Co., Ltd.) was applied onto a glass substrate with a brush and kept at 25°C for 3 hours, yielding a cured coat. Additionally, the coating composition prepared in Example 2 was applied to the cured coat by means of bar coater #8 and kept at 25°C for 3 hours, yielding a cured film.

[Comparative Example 3]

A red aqueous acrylic paint based on acrylic resin (Hapio Color by Kanpe Hapio Co., Ltd.) was applied onto a glass substrate with a brush and kept at 25°C for 3 hours, yielding a cured coat. Additionally, a solventless coating composition based on silicone resin (KR-400 by Shin-Etsu Chemical Co., Ltd.) was applied to the cured coat by means of bar coater #8 and kept at 25°C for 3 hours, yielding a cured film.

Using an ozone decomposition system (EYE UV ozone decomposition unit OCA-150L-D by Iwasaki Electric Co., Ltd.), the coated substrates in Example 7 and Comparative Example 3 were exposed to UV for 3 hours. The degradation of the films was evaluated by reflected light measurement using a colorimeter.

Specifically, a difference ($\Delta L^*$) in brightness index, a difference ($\Delta a^*$, $\Delta b^*$) in chromaticity, and a $L^*a^*b^*$ color difference ($\Delta E^*$) before and after UV exposure on the ozone decomposition system were determined by reflected light measurement using a colorimeter. The results are shown in Table 1.

[Table 1]

| | $\Delta L^*$ | $\Delta a^*$ | $\Delta b^*$ | $\Delta E^*$ |
|---|---|---|---|---|
| Example 7 | -0.1 | -0.5 | -1.8 | 1.9 |
| Comparative Example 3 | 2.4 | -4.1 | -12.3 | 12.0 |

As seen from Table 1, the cured film of Example 7 has a smaller color difference before and after UV exposure than Comparative Example 3.

These results demonstrate that core/shell nanoparticles each consisting of a tetragonal titanium oxide solid-solution nanoparticle having tin and manganese incorporated in solid solution and a shell of silicon oxide around the core absorb UV and inhibit UV irradiation to the underlying coat, thereby preventing degradation of the underlying coat.

[Example 8]

A coating composition containing titanium oxide was prepared by mixing 5 g of the core/shell nanoparticle PGM dispersion (TPG-1, solids concentration 14.5 wt%) obtained in Synthesis Example 2 with 10 g of a solventless coating composition of silicone resin (KR-400 by Shin-Etsu Chemical Co., Ltd.).

The coating composition was applied to a polycarbonate substrate (PC-1600 by Takiron Corp.) by means of bar coater #8 and kept at 25°C for 3 hours, yielding a cured film.

[Example 9]

A coating composition containing titanium oxide was prepared by mixing 5 g of the core/shell nanoparticle PGM dispersion (TPG-1, solids concentration 14.5 wt%) obtained in Synthesis Example 2 with 10 g of an organic coating composition of urethane resin (oily varnish by Washin Paint Co., Ltd.).

The coating composition was applied to a polycarbonate substrate (PC-1600 by Takiron Corp.) by means of bar coater #8 and kept at 25°C for 3 hours, yielding a cured film.

[Comparative Example 4]

A solventless coating composition of silicone resin (KR-400 by Shin-Etsu Chemical Co., Ltd.) was applied to a polycarbonate substrate (PC-1600 by Takiron Corp.) by means of bar coater #8 and kept at 25°C for 3 hours, yielding a cured film.

[Comparative Example 5]

An organic coating composition (oily varnish by Washin Paint Co., Ltd.) was applied to a polycarbonate substrate (PC-1600 by Takiron Corp.) by means of bar coater #8 and kept at 25°C for 3 hours, yielding a cured film.

[Comparative Example 6]

A solventless silicone base coating composition containing organic UV absorber (X-40-9309A by Shin-Etsu Chemical Co., Ltd.) was applied to a polycarbonate substrate (PC-1600 by Takiron Corp.) by means of bar coater #8 and kept at 25°C for 3 hours, yielding a cured film.

[Comparative Example 7]

A coating composition containing phenyltriazine as an organic UV absorber was prepared by mixing 1 g of a 4 wt% PGM solution of 2-(2,4-dihydroxyphenol)-4,6-bis(2,4-dimethylphenyl)-1,3,5-triazine with 10 g of a solventless coating composition of silicone resin (KR-400 by Shin-Etsu Chemical Co., Ltd.).
The coating composition was applied to a polycarbonate substrate (PC-1600 by Takiron Corp.) by means of bar coater #8 and kept at 25°C for 3 hours, yielding a cured film.
EYE Super UV tester W-151 (Iwasaki Electric Co., Ltd.) was used. In an environment of temperature 60°C and humidity 50% RH, UV radiation with an intensity of $1\times10^3$ W/m$^2$ was irradiated to the coated substrates prepared in Examples 8 and 9 and Comparative Examples 4 to 7 in an accumulative UV energy quantity of 750 MJ/m$^2$. On transmitted light measurement by chromaticity meter Z-300A (Nippon Denshoku Industries Co., Ltd.), a difference in yellowness index ($\Delta YI' = YI^1 - YI^0$) wherein $YI^0$ is an initial yellowness index and YI' is a yellowness index after the test was determined as an index of yellowing resistance. The results are shown in Table 2.

[Table 2]

| | Example | | Comparative Example | | | |
|---|---|---|---|---|---|---|
| | 8 | 9 | 4 | 5 | 6 | 7 |
| ΔYI' | 4.0 | -0.6 | 13.4 | 14.4 | 10.6 | 13.0 |

It is evident from Table 2 that the substrates of Examples 8 and 9 having the cured films formed of the core/shell nanoparticle-containing coating compositions show a small difference in yellowness index before and after UV exposure, as compared with the substrates of Comparative Examples 4 to 7 having the cured films formed of the core/shell nanoparticle-free coating compositions. UV-assisted yellowing of polycarbonate is suppressed.
The results demonstrate that core/shell nanoparticles each consisting of a core in the form of a tetragonal titanium oxide solid-solution nanoparticle having tin and manganese incorporated in solid solution and a shell of silicon oxide around the core absorb UV radiation and inhibit UV irradiation to the substrate or polycarbonate, thereby preventing photodegradation of polycarbonate.
Also, the substrates of Examples 8 and 9 show a small difference in yellowness index, as compared with the substrates of Comparative Examples 6 and 7 containing organic UV absorber. The benefit is ascribed to the use of inorganic particles having high light resistance and environmental stability as compared with organic dyes prone to UV decomposition. The UV absorbing ability is not reduced by photodegradation, and UV irradiation to the underlying substrate is effectively inhibited.

## Claims

1. A coating composition comprising

   (A) 100 parts by weight of a room temperature curable resin and
   (B) 0.1 to 50 parts by weight of core/shell nanoparticles each consisting of a core in the form of a tetragonal titanium oxide solid-solution nanoparticle having tin and manganese incorporated in solid solution and a shell of silicon oxide around the core.

2. The coating composition of claim 1 wherein the core/shell nanoparticles have a 50% cumulative diameter of 1 to 50 nm in a volume basis particle size distribution as measured by the dynamic light scattering method.

3. The coating composition of claim 1 or 2 wherein the room temperature curable resin is one or more resins selected from the group consisting of acrylic resins, polyester resins, silicone-modified polyester resins, silicone-modified acrylic resins, epoxy resins, polycarbonate resins, silicone resins, fluoro-resins, chlorine-base resins, polyolefin resins, urethane resins, and acrylic urethane resins.

4. The coating composition of any one of claims 1 to 3, further comprising one or more oxides selected from the group consisting of aluminum oxide, cerium oxide, zinc oxide, indium tin oxide, zirconium oxide, tin oxide, iron oxide, silicon oxide, and titanium oxide exclusive of the core/shell nanoparticles (B).

5. The coating composition of any one of claims 1 to 4 wherein the shell of silicon oxide on the surface of the core/shell nanoparticle has an organosilyl group bonded thereto via a siloxane bond.

6. A cured film obtained by curing the coating composition of any one of claims 1 to 5.

7. A coated article comprising a cured film obtained by curing the coating composition of any one of claims 1 to 5.

8. A coated article comprising a substrate and a cured film laid on at least one surface of the substrate, the cured film being obtained by curing the coating composition of any one of claims 1 to 5.

# FIG.1

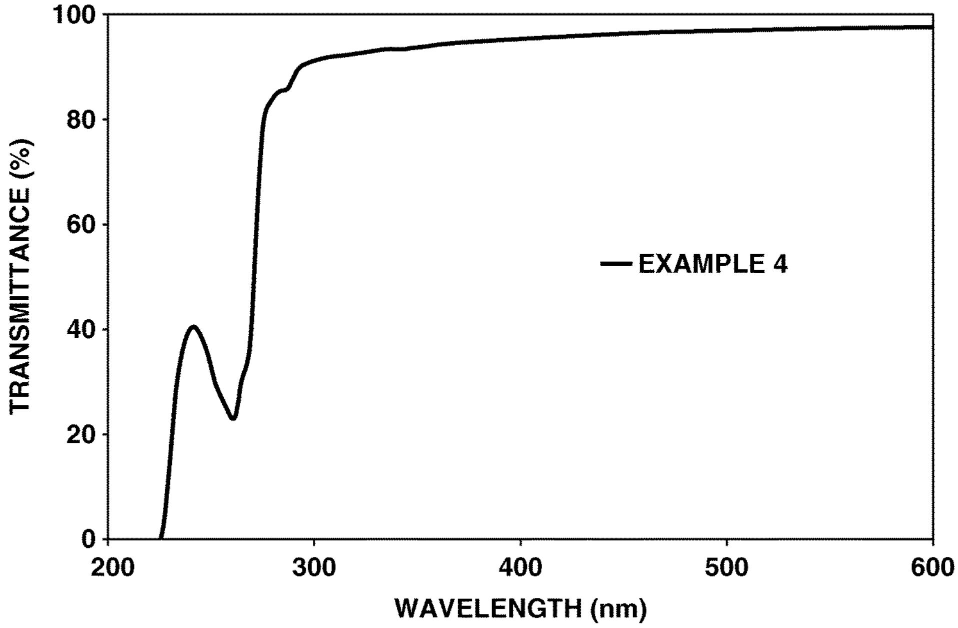
100
80
60
40
20
0
TRANSMITTANCE (%)
200
300
400
500
600
WAVELENGTH (nm)
EXAMPLE 4

# FIG.2

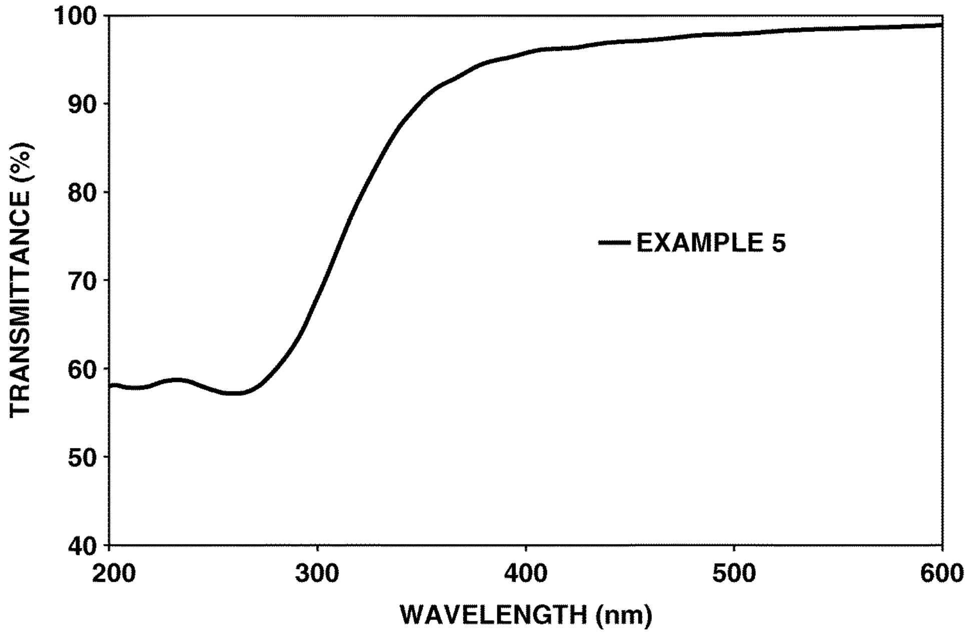
100
90
80
70
60
50
40
TRANSMITTANCE (%)
200
300
400
500
600
WAVELENGTH (nm)
EXAMPLE 5

# FIG.3

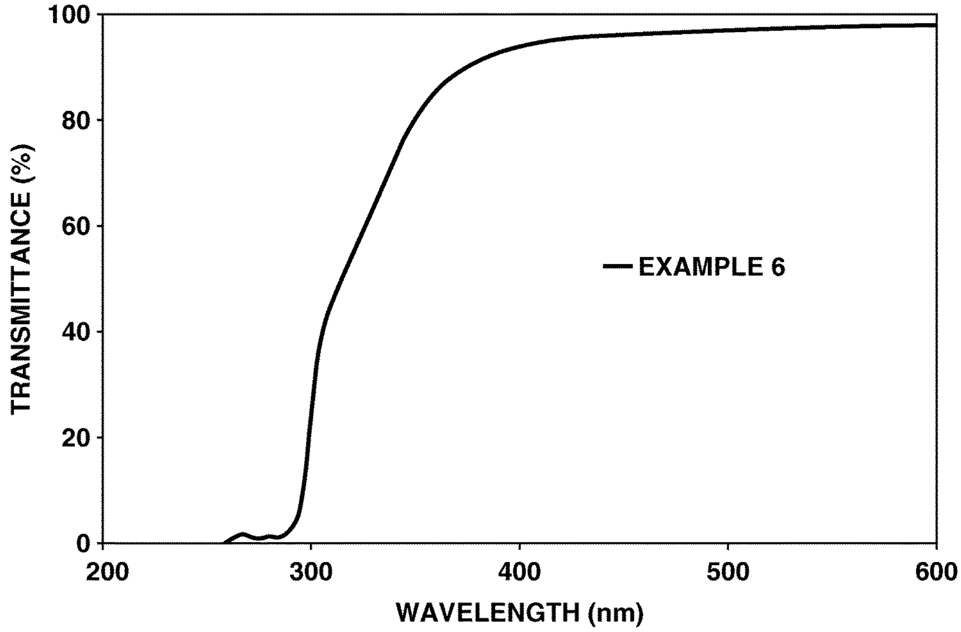
100
80
60
40
20
0
200
300
400
500
600
TRANSMITTANCE (%)
WAVELENGTH (nm)
EXAMPLE 6

# FIG.4

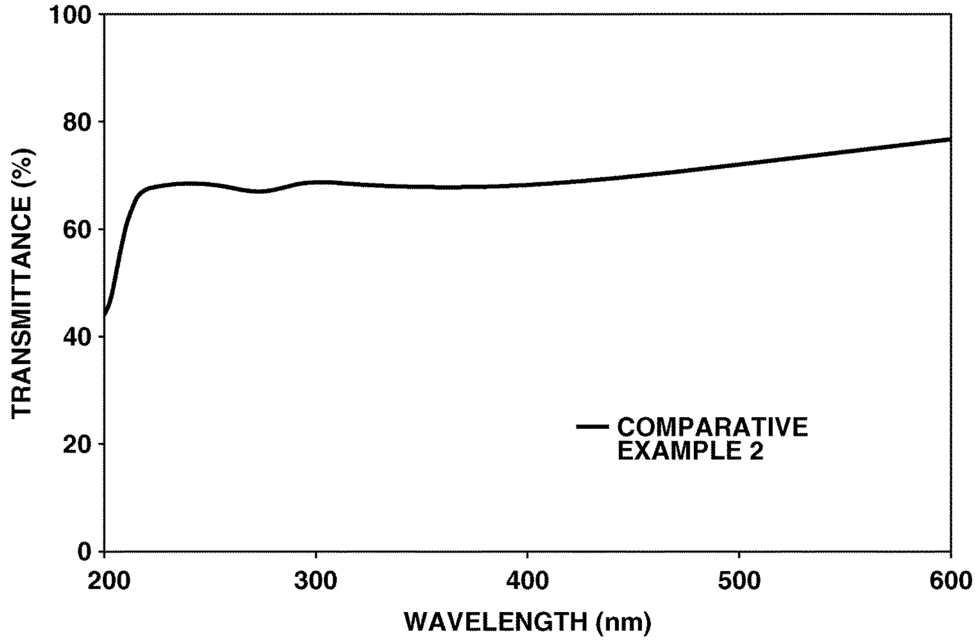
100
80
60
40
20
0
200
300
400
500
600
TRANSMITTANCE (%)
WAVELENGTH (nm)
COMPARATIVE
EXAMPLE 2

## INTERNATIONAL SEARCH REPORT

International application No.
PCT/JP2017/020992

A. CLASSIFICATION OF SUBJECT MATTER
*C09D201/00*(2006.01)i, *C09C1/36*(2006.01)i, *C09C3/06*(2006.01)i, *C09C3/12*(2006.01)i, *C09D7/12*(2006.01)i

According to International Patent Classification (IPC) or to both national classification and IPC

B. FIELDS SEARCHED

Minimum documentation searched (classification system followed by classification symbols)
C09D201/00, C09C1/36, C09C3/06, C09C3/12, C09D7/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2015-212355 A (Shin-Etsu Chemical Co., Ltd.), 26 November 2015 (26.11.2015), claims; paragraphs [0043], [0154] to [0155], [0164], [0206] to [0223]; fig. 1; examples 1 to 8 & US 2015/0125707 A1 claims; paragraphs [0082], [0207] to [0208], [0216], [0265] to [0321]; fig. 1; examples 1 to 8 & EP 002868717 A1 & CN 104610877 A & KR 10-2015-0051154 A | 1-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 June 2017 (27.06.17) | 11 July 2017 (11.07.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

INTERNATIONAL SEARCH REPORT

International application No.
PCT/JP2017/020992

C (Continuation). DOCUMENTS CONSIDERED TO BE RELEVANT

| Category* | Citation of document, with indication, where appropriate, of the relevant passages | Relevant to claim No. |
|---|---|---|
| X | JP 2016-014132 A (Shin-Etsu Chemical Co., Ltd.), 28 January 2016 (28.01.2016), claims; paragraphs [0034], [0051], [0136] to [0157]; examples 1 to 7 & US 2015/0299417 A1 claims; paragraphs [0049], [0067], [0162] to [0207]; examples 1 to 7 & EP 002933230 A1 & CN 105017841 A & KR 10-2015-0119802 A | 1-8 |
| A | JP 2016-079395 A (Shin-Etsu Chemical Co., Ltd.), 16 May 2016 (16.05.2016), claims; examples & US 2016/0108258 A1 claims; examples & EP 003009485 A1 & CN 105524549 A & KR 10-2016-0045593 A | 1-8 |
| A | JP 2016-522152 A (BASF SE), 28 July 2016 (28.07.2016), claims; examples 1 to 19 & US 2016/0108247 A1 claims; examples 1 to 19 & WO 2014/195829 A2 & EP 003004254 A1 & CN 105246981 A & KR 10-2016-0014632 A | 1-8 |
| A | JP 2009-525368 A (Kronos International, Inc.), 09 July 2009 (09.07.2009), claims; examples & US 2007/0175364 A1 claims; examples & WO 2007/085493 A2 & EP 001979421 A1 & CN 101360794 A & KR 10-2008-0090472 A | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4699992 B
- JP 5361513 B
- JP 2010261012 A
- JP 2011225660 A
- JP 5404421 B
- JP 5704133 B
- JP 2016014132 A


### Non-patent literature cited in the description


- **UENO, S. et al.** Fabrication of porous magnesium spinel with cylindrical pores by unidirectional solidification. *Journal of Physics: Conference Series,* 2009, vol. 165 (1